# EUROPEAN PATENT APPLICATION

(11) **EP 4 404 655 A1**
(43) Date of publication of application: **24.07.2024**
(21) Application number: 21957122.1
(22) Date of filing: 17.09.2021
(51) Int. Cl.: H04W 72/04, H04L 5/00

(54) **METHOD AND APPARATUS FOR REPORTING ANTENNA SWITCHING CAPABILITY OF TERMINAL DEVICE**

(71) Applicant: Beijing Xiaomi Mobile Software Co., Ltd., Beijing 100085 (CN)
(72) Inventor: GAO, Xueyuan, Beijing 100085 (CN)
(74) Representative: Stöckeler, Ferdinand
(86) International application number: PCT/CN2021/119089
(87) International publication number: WO 2023/039838

(57) **Abstract**

Embodiments of the present disclosure relate to the technical field of communications, and disclose a method and apparatus for reporting an antenna switching capability of a terminal device. The method is applied to a terminal device, and comprises: determining, according to a target division principle, antenna switching configuration combinations supported by terminal device capabilities; and sending terminal capability reporting information to a network device, the terminal capability reporting information being used for representing the antenna switching configuration combinations supported by the terminal device capabilities. Therefore, the antenna switching configuration combinations of a Rel 17 version supported by the terminal device capabilities can be defined, so that service requirements can be better met.

## Description

### FIELD

The present disclosure relates to a field of communication technologies, and more particularly to a method and an apparatus for reporting an antenna switching capability of a terminal.

### BACKGROUND

At present, in a R15/16 version, in order to meet service requirements, antenna switching configuration combinations supported by capabilities of terminals have been defined, for example, 2 transmitting channels and 4 receiving channels (2T4R), 1 transmitting channel and 4 receiving channels (1T4R), 2 transmitting channels and 2 receiving channels (2T2R), as well as 4 transmitting channels and 4 receiving channels (4T4R), and so on.

However, in a Rel 17 version, antenna switching configuration combinations supported by capabilities of terminals have not been defined. Therefore, in order to meet service requirements, defining the antenna switching configuration combinations supported by the capabilities of the terminals in the Rel 17 version has become an urgent problem to be solved.

### SUMMARY

Embodiments of a first aspect of the present disclosure provide a method for reporting an antenna switching capability of a terminal, the method is applied to the terminal, and the method includes: determining an antenna switching configuration combination supported by capability of the terminal according to a target classification principle; and sending terminal capability reporting information to a network device, the terminal capability reporting information being configured to represent the antenna switching configuration combination supported by the capability of the terminal.

In this technical solution, the antenna switching configuration combination supported by the capability of the terminal is determined according to the target classification principle, and then, the antenna switching configuration combination supported by the capability is sent to the network device. Therefore, the antenna switching configuration combination of a Rel 17 version supported by the capability of the terminal can be defined, so as to better adapt to service requirements.

Embodiments of a second aspect of the present disclosure provide a method for reporting an antenna switching capability of a terminal, the method is applied to a network device, and the method includes: receiving terminal capability reporting information sent by the terminal, the terminal capability reporting information being configured to represent an antenna switching configuration combination supported by capability of the terminal.

Embodiments of a third aspect of the present disclosure provide an apparatus for reporting an antenna switching capability of a terminal, the apparatus is applied to the terminal, and the apparatus includes: a processing unit configured to determine an antenna switching configuration combination supported by capability of the terminal according to a target classification principle; and a transceiver unit configured to send terminal capability reporting information to a network device, the terminal capability reporting information being configured to represent the antenna switching configuration combination supported by the capability of the terminal.

Embodiments of a fourth aspect of the present disclosure provide another apparatus for reporting an antenna switching capability of a terminal, the apparatus is applied to a network device, and the apparatus includes: a transceiver unit configured to receive capability reporting information sent by the terminal, the capability reporting information being configured to represent an antenna switching configuration combination supported by capability of the terminal.

Embodiments of a fifth aspect of the present disclosure provide an apparatus for reporting an antenna switching capability of a terminal, and the apparatus includes: a processor and a memory. The memory store computer programs, and the processor is configured to execute the computer programs stored in the memory to enable the apparatus to execute the method according to the embodiments of the first aspect of the present disclosure.

Embodiments of a sixth aspect of the present disclosure provide another apparatus for reporting an antenna switching capability of a terminal, and the apparatus includes: a processor and a memory. The memory stores computer programs, and the processor is configured to execute the computer programs stored in the memory to enable the apparatus to execute the method according to the embodiments of the second aspect of the present disclosure.

Embodiments of a seventh aspect of the present disclosure provide an apparatus for reporting an antenna switching capability of a terminal, and the apparatus includes: a processor and an interface circuit. The interface circuit is configured to receive a code instruction and transmit the code instruction to the processor. The processor is configured to run the code instruction to execute the method according to the embodiments of the first aspect of the present disclosure.

Embodiments of an eighth aspect of the present disclosure provide another apparatus for reporting an antenna switching capability of a terminal, and the apparatus includes: a processor and an interface circuit. The interface circuit is configured to receive a code instruction and transmit the code instruction to the processor. The processor is configured to run the code instruction to execute the method according to the embodiments of the second aspect of the present disclosure.

Embodiments of a ninth aspect of the present disclosure provide a computer-readable storage medium for storing instructions, which, when executed, allows the method according to the embodiments of the first aspect of the present disclosure to be implemented.

Embodiments of a tenth aspect of the present disclosure provide another computer-readable storage medium for storing instructions, which, when executed, allows the method according to the embodiments of the second aspect of the present disclosure to be implemented.

Embodiments of an eleventh aspect of the present disclosure provide a computer program product, which, when running on a computer, allows the computer to execute the method according to the embodiments of the above first aspect.

Embodiments of a twelfth aspect of the present disclosure provide a computer program product, which, when running on a computer, allows the computer to execute the method according to the embodiments of the above second aspect.

### BRIEF DESCRIPTION OF THE DRAWINGS

In order to more clearly illustrate the technical solutions in the embodiments of the present disclosure or the background, the drawings to be used in the embodiments of the present disclosure or the background will be described below.
Fig. 1 is a schematic diagram of a time slot of an SRS region provided by embodiments of the present disclosure.
Fig. 2 is a flow chart of a method for reporting an antenna switching capability of a terminal provided by embodiments of the present disclosure.
Fig. 3 is a flow chart of another method for reporting an antenna switching capability of a terminal provided by embodiments of the present disclosure.
Fig. 4 is a flow chart of another method for reporting an antenna switching capability of a terminal provided by embodiments of the present disclosure.
Fig. 5 is a flow chart of another method for reporting an antenna switching capability of a terminal provided by embodiments of the present disclosure.
Fig. 6 is a schematic diagram of an apparatus for reporting an antenna switching capability of a terminal provided by embodiments of the present disclosure.
Fig. 7 is a schematic diagram of another apparatus for reporting an antenna switching capability of a terminal provided by embodiments of the present disclosure.
Fig. 8 is a block diagram of a terminal provided by embodiments of the present disclosure.
Fig. 9 is a schematic diagram of a network device provided by embodiments of the present disclosure.

### DETAILED DESCRIPTION

Illustrative embodiments will be described herein in detail, examples of which are illustrated in the accompanying drawings. When the following description refers to the drawings, the same numerals in different drawings represent the same or similar elements, unless otherwise indicated. The implementations described in the following illustrative embodiments do not represent all the implementations consistent with the present disclosure. On the contrary, they are only examples of apparatuses and methods as detailed in the attached claims and consistent with some aspects of the present disclosure.

It can be understood that in the present disclosure, "a plurality of" refers to two or more, and other quantifiers are similar. The character "and/or" describes an associative relationship of associated objects, and indicates that three relationships can exist. For example, A and/or B can represent: A alone, both A and B, and B alone. The character "/" generally indicates an "or" relationship between the associated former and latter objects. The singular forms of "a", "said" and "the" are also intended to include the plural form, unless the context clearly indicates other meanings.

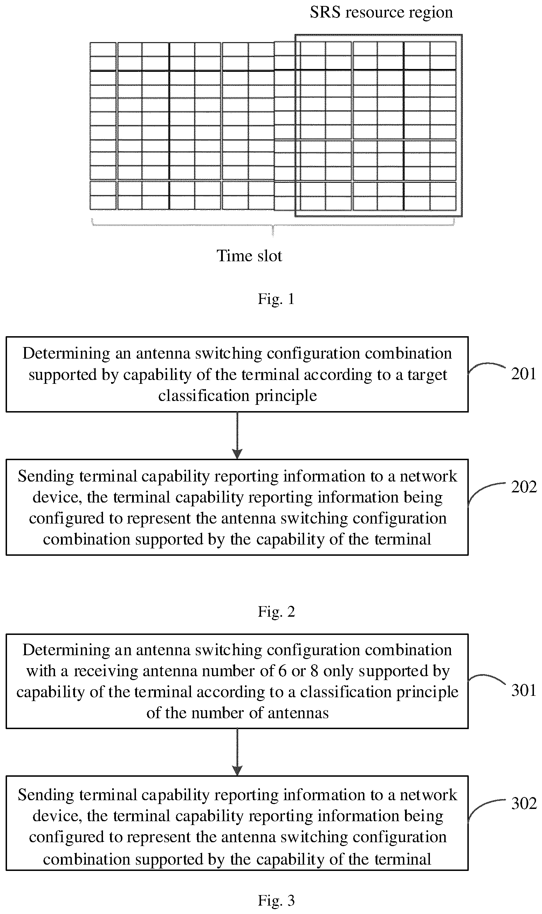

In a 5G New Radio (5G NR) system, an uplink sounding reference signal (SRS) can be periodic, semi-continuous or non-periodic SRS, with a narrowband or a wideband, and a single port or a plurality of ports. A network device configures an uplink SRS parameter to a terminal, such as the number of ports, a frequency domain resource location, a time domain resource location, a sequence, and a sequence cyclic offset and so on. In the 5G NR system, as shown in Fig. 1, the SRS maps on at most six symbols in one uplink time slot.

The network device can configure a plurality of sets of uplink SRS resources for the terminal, and one set of SRS resources can contain one or more SRS resources. One SRS resource can be on N consecutive OFDM (Orthogonal Frequency Division Multiplexing) symbols, and N can occupy 1, 2, or 4 symbols.

The NR system supports a 5G base station (referred to as gNB) to obtain downlink channel information through channel reciprocity to improve downlink data transmission performance. In order to support that the gNB can effectively obtain the downlink information through channel reciprocity even under various transmission and reception capabilities of terminals, the NR system has specially designed a SRS reference signal. Antenna switching configuration combinations supported by capabilities of the terminals defined in a current R15/16 version can include a same number of transmitting antennas and receiving antennas (T=R) and more receiving antennas than transmitting antennas (R>T), where the same number of transmitting antennas and receiving antennas mainly include: one transmitting channel and one receiving channel (1T1R), two transmitting channels and two receiving channels (2T2R), as well as four transmitting channels and four receiving channels (4T4R); and more receiving antennas than transmitting antennas mainly include: one transmitting channel and two receiving channels (1T2R), one transmitting channel and four receiving channels (1T4R), two transmitting channels and four receiving channels (2T4R).

It should be noted that for different antenna switching configuration combinations, the corresponding SRS resource configurations are also different. For example, for a terminal with the same number of transmitting antennas and receiving antennas (T=R), the gNB can configure at most two SRS resource sets, and there is only one SRS resource in one set, where the number of ports is equal to the number of the transmitting antennas of the terminal. In two sets of SRS resources, one set of SRS resources can be configured as periodic SRSs and the other set of SRS resources can be configured as non-periodic SRSs. For a terminal with a support capability of one transmitting channel and two receiving channels (1T2R), the gNB can configure at most two sets of SRS resources, there are two SRS resources in one set of SRS resources and each SRS resource has one port. For a terminal with a support capability of two transmitting channels and four receiving channels (2T4R), the gNB can configure at most two sets of SRS resources, there are two SRS resources in one set of SRS resources and each SRS resource has two ports. For a terminal with a support capability of one transmitting channel and four receiving channels (1T4R), special considerations are required for the gNB to configure SRS resources. For example, periodic or semi-continuous SRS resources can only configure at most one set of SRS resources, there are four SRS resources, and each SRS resource has one port. At most two sets of SRS resources can be configured for non-periodic SRS resources, there are a total of four SRS resources in the two sets of SRS resources, and these four SRS resources are transmitted within two time slots and are transmitted by different physical antennas. The two sets of SRS resources can be configured with two SRS resources in each SRS set. Or, one SRS resource is in one set of SRS resources and three SRS resources are in the other set of SRS resources. Each SRS resource has one port.

The typical antenna configurations currently defined are { 1T6R, 1T8R, 2T6R, 2T8R, 4T6R, 4T8R}, as shown in Table 1 below. In the R17 research, the antenna switching configuration combinations supported by capabilities of the terminals have not been defined yet, considering the need for further increase in the number of the antennas of the terminal, the number of the antennas can be increased to 6 or 8. Therefore, in order to meet service requirements, defining the antenna switching configuration combinations supported by capabilities of the terminals in protocol R17 has become an urgent problem to be solved.

**Table 1: SRS antenna switching configuration combinations with at most 8 antennas**

| Tx\Rx | 6Rx | 8Rx |
|---|---|---|
| 1T | 1T6R | 1T8R |
| 2T | 2T6R | 2T8R |
| 4T | 4T6R | 4T8R |

It can be understood that each element and each corresponding relationship in Table 1 exist independently; these elements and corresponding relationships are illustratively listed in the same table, but it does not mean that all the elements and corresponding relationships in the table must exist simultaneously as shown in Table 1. Each element value and each corresponding relationship are independent of any other element value or corresponding relationship in Table 1. Therefore, it can be understood by those skilled in the art that the value of each element and each corresponding relationship in Table 1 are an independent embodiment.

For the above problem, the present disclosure provides a method and an apparatus for reporting an antenna switching capability of a terminal.

Fig. 2 is a flow chart of a method for reporting an antenna switching capability of a terminal provided by the embodiments of the present disclosure. The method for reporting the antenna switching capability of the terminal can be applied to the terminal.

The terminals may mean a device that provides voice and/or data connectivity to users, a handheld device with a wireless connection function, or other processing devices connected to wireless modems and so on. In different systems, the names of the terminals may also vary. For example, in a 5G system, the terminal can be called a user equipment (UE). A wireless terminal can communicate with one or more core networks (CN) through RAN. The wireless terminal can be a mobile terminal, such as a mobile phone (or referred to as a "cellular" phone) and a computer with a mobile terminal, such as portable, pocket-sized, handheld, computer-integrated or vehicle-mounted mobile devices, which exchange language and/or data with wireless access networks.

For example, the terminal can be a personal communication service (PCS) phones, a cordless phone, a session initiated protocol (SIP) handset, a wireless local loop (WLL) station, a personal digital assistant (PDA) and other devices. The wireless terminal can also be called a system, a subscriber unit, a subscriber station, a mobile station, a mobile, a remote station, an access point, a remote terminal, an access terminal, a user terminal, a user agent, and a user device, which are not limited in the embodiments of the present disclosure.

As shown in Fig. 2, the method for reporting the antenna switching capability of the terminal can include the following steps.

In step 201, an antenna switching configuration combination supported by capability of the terminal is determined according to a target classification principle.

In order to meet service requirements, the terminal may determine the antenna switching configuration combination supported by its own capability, and send terminal capability reporting information to the network device. In the embodiments of the present disclosure, the antenna switching configuration combination supported by the capability of the terminal can be determined according to the target classification principle. In some embodiments of the present disclosure, the target classification principle may include a classification principle of support capability. In some other embodiments of the present disclosure, the target classification principle may include: a classification principle of the number of antennas or a classification principle of the number of antenna ports.

As an example, the antenna switching configuration combination supported by the capability of the terminal can be determined according to the classification principle of support capability. The support capability of the terminal may include: supporting dynamic switching of transmitting antennas or transmitting antenna ports; or, supporting dynamic switching of receiving antennas or receiving antenna ports; or, supporting dynamic switching of transmitting antennas and receiving antennas simultaneously; or, supporting dynamic switching of transmitting ports and receiving ports simultaneously. Supporting the dynamic switching of the transmitting antennas can be supporting the receiving antennas not to be changed, and supporting the dynamic switching of the transmitting antenna ports can be supporting the receiving antenna ports not to be changed, i.e., switching from xTyR to zTyR, where x is not equal to z. For example, the terminal of 4T4R switches to 2T4R or 1T4R. Supporting the dynamic switching of the receiving antennas can be supporting the transmitting antennas not to be changed. Supporting the dynamic switching of the receiving antenna ports can be supporting the transmitting antenna ports not to be changed, i.e., switching from xTyR to xTzR, where x is not equal to z. For example, the terminal of 1T4R switches to 1T2R or 1T1R. Supporting the dynamic switching of the transmitting antennas and the receiving antennas simultaneously, or, supporting the dynamic switching of the transmitting ports and the receiving ports simultaneously, may be switching from xTyR to x'Ty'R, where x, y are allowed to be not equal to x', y' at the same time. For example, the terminal of 4T4R switches to 1T2R or 1T1R.

As another example, the antenna switching configuration combination supported by the capability of the terminal can be determined according to the classification principle of the number of antennas of the terminal. The antenna number can be the physical antenna number.

As another example, the antenna switching configuration combination supported by the capability of the terminal can be determined according to the classification principle of the number of antenna ports. It should be noted that the antenna ports do not have a one-to-one correspondence with the physical antennas. In the downlink, the downlink and the downlink reference signal have a one-to-one correspondence. If one reference signal is transmitted through a plurality of physical antennas, these physical antennas correspond to the same antenna port. If two different antennas make transmission from the same physical layer antenna, this physical antenna corresponds to two separate antenna ports.

In step 202, the terminal capability reporting information is sent to the network device, and the terminal capability reporting information is configured to represent the antenna switching configuration combination supported by the capability of the terminal.

Further, the terminal can send the terminal capability reporting information to the network device, and the terminal capability reporting information is configured to represent the antenna switching configuration combination supported by the capability of the terminal.

In summary, according to the target classification principle, the antenna switching configuration combination supported by the capability of the terminal is determined, and then, the antenna switching configuration combination supported by the capability is sent to the network device. Therefore, the antenna switching configuration combination of the Rel 17 version supported by the capability of the terminal can be defined, so that the service requirements can be better met.

Embodiments of the present disclosure provide another method for reporting an antenna switching capability of a terminal, and FIG. 3 shows a flow chart of another method for reporting the capability of the terminal provided by the embodiments of the present disclosure. The method for reporting the antenna switching capability of the terminal can be applied to the terminal.

As shown in FIG. 3, the method for reporting the antenna switching capability of the terminal can include the following steps.

In step 301, according to a classification principle of the number of antennas, it is determined that the capability of the terminal only supports the antenna switching configuration combination with a receiving antenna number of 6 or 8.

As an example, according to the classification principle of the number of antennas, it can be determined that the capability of the terminal only supports the antenna switching configuration combination of the Rel 17 version.

In the embodiments of the present disclosure, different antenna number divisions may correspond to different antenna switching configuration combinations that are only supported by the capability of the terminal.

As an example, the antenna number is classified as 6, and the antenna switching configuration combination only supported by the capability of the terminal can at least include one or more of the following A)-E) items: A) one transmitting channel and six receiving channels (1T6R); B) two transmitting channels and six receiving channels (2T6R); C) four transmitting channels and six receiving channels (4T6R); D) one transmitting channel and six receiving channels (1T6R), two transmitting channels and six receiving channels (2T6R); E) one transmitting channel and six receiving channels (1T6R), two transmitting channels and six receiving channels (2T6R), four transmitting channels and six receiving channels (4T6R). It should be noted that the channel can correspond to the antenna or the antenna port.

As another example, the antenna number is classified as 8, and the antenna switching configuration combination only supported by the capability of the terminal can include at least one or more of the following A)-H) items: A) one transmitting channel and eight receiving channels (1T8R); B) two transmitting channels and eight receiving channels (2T8R); C) four transmitting channels and eight receiving channels (4T8R); D) one transmitting channel and eight receiving channels (1T8R), two transmitting channels and eight receiving channels (2T8R); E) one transmitting channel and eight receiving channels (1T8R), two transmitting channels and eight receiving channels (2T8R), four transmitting channels and eight receiving channels (4T8R); F) one transmitting channel and six receiving channels (1T6R), one transmitting channel and eight receiving channels (1T8R), two transmitting channels and eight receiving channels (2T8R), four transmitting channels and eight receiving channels (4T8R); G) one transmitting channel and six receiving channels (1T6R), two transmitting channels and six receiving channels (2T6R), two transmitting channels and eight receiving channels (2T8R), four transmitting channels and eight receiving channels (4T8R); H) one transmitting channel and six receiving channels (1T6R), two transmitting channels and six receiving channels (2T6R), one transmitting channel and eight receiving channels (1T8R), two transmitting channels and eight receiving channels (2T8R), four transmitting channels and eight receiving channels (4T8R). It should be noted that the channel can correspond to the antenna or the antenna port.

In step 302, terminal capability reporting information is sent to a network device, and the terminal capability reporting information is configured to represent the antenna switching configuration combination supported by the capability of the terminal.

The step 302 can be realized in any way of the various embodiments of the present disclosure, respectively, which is not limited in the embodiments of the present disclosure, and also will not be detailed here.

In summary, according to the classification principle of the number of antennas, it is determined that the capability of the terminal only supports the antenna switching configuration combination with a receiving antenna number of 6 or 8. The terminal capability reporting information is sent to the network device, and the terminal capability reporting information is configured to represent the antenna switching configuration combination supported by the capability of the terminal. Therefore, the antenna switching configuration combination with the receiving antenna number of 6 or 8 only supported by the capability of the terminal can be defined, so as to better adapt to the service requirements.

It should be noted that the above possible implementations can be executed separately or in combination, which is not limited by the embodiments of the present disclosure.

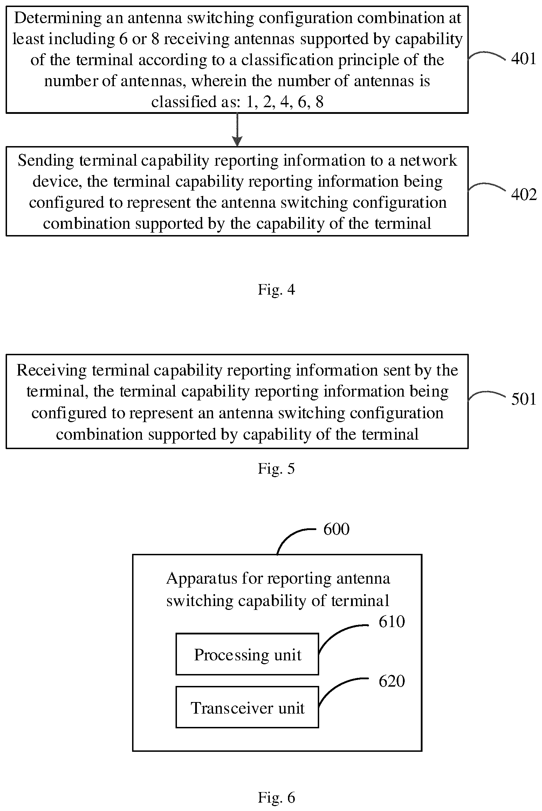

The embodiments of the present disclosure provide another method for reporting an antenna switching capability of a terminal, and FIG. 4 shows a flow chart of another method for reporting the antenna switching capability of the terminal provided by the embodiments of the present disclosure. The method for reporting the antenna switching capability of the terminal can be applied to the terminal.

As shown in FIG. 4, the method for reporting the antenna switching capability of the terminal can include the following steps.

In step 401, according to a classification principle of the number of antennas, it is determined capability of the terminal supports an antenna switching configuration combination at least including 6 or 8 receiving antennas. The antenna number is classified as: 1, 2, 4, 6, 8.

As an example, according to the classification principle of the number of antennas, it is determined that the capability of the terminal supports the antenna switching configuration combination of a first version. The first version includes: a Rel 17 version, as well as any one or more of a Rel 15 version and a Rel 16 version.

In the embodiments of the present disclosure, different antenna number divisions may correspond to different antenna switching configuration combinations that are supported by the capability of the terminal.

As an example, the antenna number is classified as 6, and the antenna switching configuration combination supported by the capability of the terminal can at least include one or more of the following A)-E) items: A) one transmitting channel and one receiving channel (1T1R), one transmitting channel and two receiving channels (1T2R), one transmitting channel and four receiving channels (1T4R), one transmitting channel and six receiving channels (1T6R); B) one transmitting channel and one receiving channel (1T1R), one transmitting channel and two receiving channels (1T2R), two transmitting channels and two receiving channels (2T2R), two transmitting channels and four receiving channels (2T4R), two transmitting channels and six receiving channels (2T6R); C) one transmitting channel and one receiving channel (1T1R), one transmitting channel and two receiving channels (1T2R), two transmitting channels and two receiving channels (2T2R), one transmitting channel and four receiving channels (1T4R), one transmitting channel and six receiving channels (1T6R), two transmitting channels and four receiving channels (2T4R), two transmitting channels and six receiving channels (2T6R); D) one transmitting channel and one receiving channel (1T1R), two transmitting channels and two receiving channels (2T2R), four transmitting channels and four receiving channels (4T4R), four transmitting channels and six receiving channels (4T6R); E) one transmitting channel and one receiving channel (1T1R), one transmitting channel and two receiving channels (1T2R), two transmitting channels and two receiving channels (2T2R), one transmitting channel and four receiving channels (1T4R), one transmitting channel and six receiving channels (1T2R), two transmitting channels and four receiving channels (2T4R), two transmitting channels and six receiving channels (2T6R), four transmitting channels and six receiving channels (4T6R). It should be noted that the channel can correspond to the antenna or the antenna port.

As another example, the antenna number is classified as 8, and the antenna switching configuration combination supported by the capability of the terminal can at least include one or more of the following A)-E) items: A) one transmitting channel and one receiving channel (1T1R), one transmitting channel and two receiving channels (1T2R), one transmitting channel and four receiving channels (1T4R), and one transmitting channel and eight receiving channels (1T8R); B) one transmitting channel and one receiving channel (1T1R), one transmitting channel and two receiving channels (1T2R), two transmitting channels and two receiving channels (2T2R), two transmitting channels and four receiving channels (2T4R), two transmitting channels and eight receiving channels (2T8R); C) one transmitting channel and one receiving channel (1T1R), one transmitting channel and two receiving channels (1T2R), two transmitting channels and two receiving channels (2T2R), two transmitting channels and four receiving channels (2T4R), one transmitting channel and four receiving channels (1T4R), one transmitting channel and six receiving channels (1T6R), two transmitting channels and six receiving channels (2T6R), two transmitting channels and eight receiving channels (2T8R); D) one transmitting channel and one receiving channel (1T1R), two transmitting channels and two receiving channels (2T2R), four transmitting channels and four receiving channels (4T4R), four transmitting channels and eight receiving channels (4T8R); E) one transmitting channel and one receiving channel (1T1R), one transmitting channel and two receiving channels (1T2R), two transmitting channels and two receiving channels (2T2R), one transmitting channel and four receiving channels (1T4R), one transmitting channel and six receiving channels (1T6R), one transmitting channel and eight receiving channels (1T8R), two transmitting channels and four receiving channels (2T4R), two transmitting channels and six receiving channels (2T6R), two transmitting channels and eight receiving channels (2T8R), four transmitting channels and six receiving channels (4T6R), and four transmitting channels and eight receiving channels (4T8R). It should be noted that the channel can correspond to the antenna or the antenna port.

In step 402, terminal capability reporting information is sent to a network device, and the terminal capability reporting information is configured to represent the antenna switching configuration combination supported by the capability of the terminal.

The step 402 can be realized in any way of the various embodiments of the present disclosure, respectively, which is not limited in the embodiments of the present disclosure, and also will not be detailed here.

In summary, according to the classification principle of the number of antennas, it is determined that the capability of the terminal supports the antenna switching configuration combination at least including 6 or 8 receiving antennas. The antenna number is classified as: 1, 2, 4, 6, 8. The capability reporting information is sent to the network device, and the capability reporting information is configured to represent the antenna switching configuration combination supported by the capability of the terminal, thereby realizing a definition of the antenna switching configuration combination at least including 6 or 8 receiving antennas supported by the capability of the terminal, so as to better adapt to the service requirements

In the method for reporting the antenna switching capability of the terminal in the embodiments of the present disclosure, it is determined that the antenna switching configuration combination supported by the capability of the terminal according to the target classification principle, and then the antenna switching configuration combination supported by the capability is sent to the network device. Therefore, the antenna switching configuration combination of the Rel 17 version supported by the capability of the terminal can be defined, so as to adapt to the service requirements.

It should be noted that the above possible implementations can be executed separately or in combination, which is not limited in the embodiments of the present disclosure.

The embodiments of the present disclosure provide another method for reporting an antenna switching capability of a terminal, and Fig. 5 shows a flow chart of another method for reporting the antenna switching capability of the terminal provided by the embodiments of the present disclosure. The method for reporting the antenna switching capability of the terminal may be applied to a network device.

As shown in Fig. 5, the method for reporting the antenna switching capability of the terminal can include the following steps.

In step 501, terminal capability reporting information sent by a terminal is received, and the terminal capability reporting information is configured to represent the antenna switching configuration combination supported by the capability of the terminal.

For example, the network device is a base station. The base station may include a plurality of cells that provide services for the terminal. Depending on different specific application scenarios, each cell may include a plurality of TRPs (Transmitting Receiving Points), or may be a device in an access network, which device communicates with a wireless terminal through one or more sectors on an air interface, or have other names. For example, the base station involved in the embodiments of the present disclosure may be a BTS (Base Transceiver Station) in GSM (Global System for Mobile communications) or CDMA (Code Division Multiple Access), or a base station (NodeB) in WCDMA (Wide-band Code Division Multiple Access). It may also be a evolutional Node B (abbreviated as eNB or e-NodeB) in a LTE (long term evolution) system, a 5G base station (abbreviated as gNB) in a 5G network architecture (next generation system), a HeNB (Home Evolved Node B), a relay node, a femto, a pico, etc., which is not limited in the embodiments of the present disclosure.

In the embodiments of the present disclosure, the terminal sends the terminal capability reporting information for indicating the antenna switching configuration combination supported by the capability of the terminal to the network device, and then, the network device can receive the terminal capability reporting information sent by the terminal.

In the method for reporting the antenna switching capability of the terminal in the embodiments of the present disclosure, the terminal capability reporting information sent by the terminal is received, the terminal capability reporting information is configured to represent the antenna switching configuration combination supported by the capability of the terminal. Therefore, the antenna switching configuration combination of the Rel 17 version supported by the capability of the terminal can be defined, so as to adapt to the service requirements.

Corresponding to the above methods for reporting the antenna switching capability of the terminal provided in the embodiments of Fig. 2 to Fig. 4, the present disclosure also provides an apparatus for reporting an antenna switching capability of a terminal. Since the apparatus for reporting the antenna switching capability of the terminal provided in the embodiments of the present disclosure corresponds to the above methods for reporting the antenna switching capability of the terminal provided in the embodiments of Fig. 2 to Fig. 4, the implementations of the method for reporting the antenna switching capability of the terminal are also applicable to the apparatus for reporting the antenna switching capability of the terminal provided in the embodiments of the present disclosure, which will be not described in detail in the embodiments of the present disclosure.

Fig. 6 is a schematic diagram of an apparatus for reporting an antenna switching capability of a terminal provided by embodiments of the present disclosure.

As shown in Fig. 6, an apparatus 600 for reporting the antenna switching capability of the terminal is applied to the terminal. The apparatus 600 for reporting the antenna switching capability of the terminal can include: a processing unit 610 and a transceiver unit 620.

The processing unit 610 is configured to determine an antenna switching configuration combination supported by the capability of the terminal according to a target classification principle. The transceiver unit 620 is configured to send terminal capability reporting information to a network device, and the terminal capability reporting information is configured to represent the antenna switching configuration combination supported by the capability of the terminal.

As a possible implementation of the embodiments of the present disclosure, the target classification principle may include a classification principle of support capability.

As a possible implementation of the embodiments of the present disclosure, the target classification principle may further include: a classification principle of the number of antennas or a classification principle of the number of antenna ports.

As a possible implementation of the embodiments of the present disclosure, the processing unit 610 is configured to determine, according to the target classification principle, that the capability of the terminal only supports the antenna switching configuration combination with a receiving antenna number of 6 or 8.

As a possible implementation of the embodiments of the present disclosure, the antenna number is classified as 6, and the antenna switching configuration combination only supported by the capability of the terminal can at least include one or more of the following A)-E) items: A) one transmitting channel and six receiving channels; B) two transmitting channels and six receiving channels; C) four transmitting channels and six receiving channels; D) one transmitting channel and six receiving channels, two transmitting channels and six receiving channels; E) one transmitting channel and six receiving channels, two transmitting channels and six receiving channels, four transmitting channels and six receiving channels. It should be noted that the channel corresponds to the antenna or the antenna port.

As a possible implementation of the embodiments of the present disclosure, the antenna number is classified as 8, and the antenna switching configuration combination only supported by the capability of the terminal can include at least one or more of the following A)-H) items: A) one transmitting channel and eight receiving channels; B) two transmitting channels and eight receiving channels; C) four transmitting channels and eight receiving channels; D) one transmitting channel and eight receiving channels, two transmitting channels and eight receiving channels; E) one transmitting channel and eight receiving channels, two transmitting channels and eight receiving channels, four transmitting channels and eight receiving channels; F) one transmitting channel and six receiving channels, one transmitting channel and eight receiving channels, two transmitting channels and eight receiving channels, four transmitting channels and eight receiving channels; G) one transmitting channel and six receiving channels, two transmitting channels and six receiving channels, two transmitting channels and eight receiving channels, four transmitting channels and eight receiving channels; H) one transmitting channel and six receiving channels, two transmitting channels and six receiving channels, one transmitting channel and eight receiving channels, two transmitting channels and eight receiving channels, four transmitting channels and eight receiving channels.

As a possible implementation of the embodiments of the present disclosure, the processing unit 610 is further configured to determine, according to the target classification principle, that the capability of the terminal supports the antenna switching configuration combination at least including 6 or 8 receiving antennas.

As a possible implementation of the embodiments of the present disclosure, the antenna number is classified as: 1, 2, 4, 6, 8.

As a possible implementation of the embodiments of the present disclosure, the antenna number is classified as 6, and the antenna switching configuration combination supported by the capability of the terminal can at least include one or more of the following A)-E) items; A) one transmitting channel and one receiving channel, one transmitting channel and two receiving channels, one transmitting channel and four receiving channels, one transmitting channel and six receiving channels; B) one transmitting channel and one receiving channel, one transmitting channel and two receiving channels, two transmitting channels and two receiving channels, two transmitting channels and four receiving channels, two transmitting channels and six receiving channels; C) one transmitting channel and one receiving channel, one transmitting channel and two receiving channels, two transmitting channels and two receiving channels, one transmitting channel and four receiving channels, one transmitting channel and six receiving channels, two transmitting channels and four receiving channels, two transmitting channels and six receiving channels; D) one transmitting channel and one receiving channel, two transmitting channels and two receiving channels, four transmitting channels and four receiving channels, four transmitting channels and six receiving channels; E) one transmitting channel and one receiving channel, one transmitting channel and two receiving channels, two transmitting channels and two receiving channels, one transmitting channel and four receiving channels, one transmitting channel and six receiving channels, two transmitting channels and four receiving channels, two transmitting channels and six receiving channels, four transmitting channels and six receiving channels.

As a possible implementation of the embodiments of the present disclosure, the antenna number is classified as 8, and the antenna switching configuration combination supported by the capability of the terminal can at least include one or more of the following A)-E) items; A) one transmitting channel and one receiving channel, one transmitting channel and two receiving channels, one transmitting channel and four receiving channels, and one transmitting channel and eight receiving channels; B) one transmitting channel and one receiving channel, one transmitting channel and two receiving channels, two transmitting channels and two receiving channels, two transmitting channels and four receiving channels, two transmitting channels and eight receiving channels; C) one transmitting channel and one receiving channel, one transmitting channel and two receiving channels, two transmitting channels and two receiving channels, two transmitting channels and four receiving channels, one transmitting channel and four receiving channels, one transmitting channel and six receiving channels, two transmitting channels and six receiving channels, two transmitting channels and eight receiving channels; D) one transmitting channel and one receiving channel, two transmitting channels and two receiving channels, four transmitting channels and four receiving channels, four transmitting channels and eight receiving channels; E) one transmitting channel and one receiving channel, one transmitting channel and two receiving channels, two transmitting channels and two receiving channels, one transmitting channel and four receiving channels, one transmitting channel and six receiving channels, one transmitting channel and eight receiving channels, two transmitting channels and four receiving channels, two transmitting channels and six receiving channels, two transmitting channels and eight receiving channels, four transmitting channels and six receiving channels, and four transmitting channels and eight receiving channels.

As a possible implementation of the embodiments of the present disclosure, the support capability may include: supporting dynamic switching of transmitting antennas or transmitting antenna ports; or supporting dynamic switching of receiving antennas or receiving antenna ports; or supporting dynamic switching of transmitting antennas and receiving antennas simultaneously; or supporting dynamic switching of transmitting ports and receiving ports simultaneously.

The apparatus for reporting the antenna switching capability of the terminal in the embodiments of the present disclosure determines the antenna switching configuration combination supported by the capability of the terminal according to the target classification principle, and then sends the antenna switching configuration combination supported by the capability to the network device. Therefore, the antenna switching configuration combination of the Rel 17 version supported by the capability of the terminal can be defined, so as to better adapt to the service requirements.

It should be noted that the above possible implementations can be executed separately or in combination, which is not limited in the embodiments of the present disclosure.

Corresponding to the above method for reporting the antenna switching capability of the terminal provided in the embodiments of Fig. 5, the present disclosure also provides another apparatus for reporting an antenna switching capability of a terminal. Since the apparatus for reporting the antenna switching capability of the terminal provided in the embodiments of the present disclosure corresponds to the above method for reporting the antenna switching capability of the terminal provided in the embodiments of Fig. 5, the implementations of the method for reporting the antenna switching capability of the terminal are also applicable to the apparatus for reporting the antenna switching capability of the terminal provided in the embodiments of the present disclosure, which will be not described in detail in the embodiments of the present disclosure.

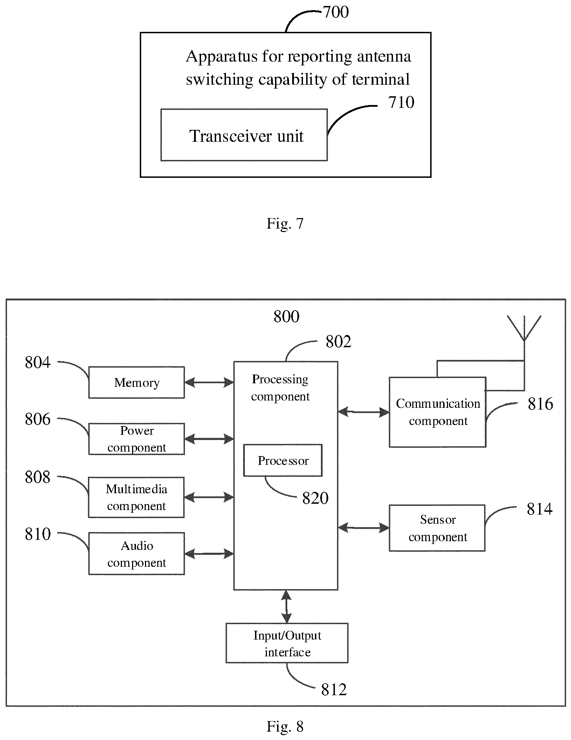

Fig. 7 is a schematic diagram of another apparatus for reporting an antenna switching capability of a terminal provided by embodiments of the present disclosure.

As shown in Fig. 7, an apparatus 700 for reporting the antenna switching capability of the terminal is applied to a network device. The apparatus 700 for reporting the capability of the terminal includes a transceiver unit 710.

The transceiver unit 710 is configured to receive terminal capability reporting information sent by a terminal, and the terminal capability reporting information is configured to represent the antenna switching configuration combination supported by the capability of the terminal.

The apparatus for reporting the antenna switching capability of the terminal in the embodiments of the present disclosure receives the terminal capability reporting information sent by the terminal, and the terminal capability reporting information is configured to represent the antenna switching configuration combination supported by the capability of the terminal. Therefore, the antenna switching configuration combination of the Rel 17 version supported by the capability of the terminal can be defined, so as to better adapt to the service requirements.

It should be noted that the above possible implementations can be executed separately or in combination, which is not limited in the embodiments of the present disclosure.

In order to achieve the above embodiments, the present disclosure provides an apparatus for reporting an antenna switching capability of a terminal, the apparatus includes a processor and a memory, the memory stores computer programs, and the processor executes the computer programs stored in the memory to enable the apparatus to execute the methods described in the embodiments of Fig. 2 to Fig. 4.

In order to achieve the above embodiments, the present disclosure provides another apparatus for reporting an antenna switching capability of a terminal, the apparatus includes a processor and a memory, the memory stores computer programs, and the processor executes the computer programs stored in the memory to enable the apparatus to execute the method described in the embodiments of Fig. 5.

In order to achieve the above embodiments, the present disclosure provides an apparatus for reporting an antenna switching capability of a terminal, the apparatus includes a processor and an interface circuit, the interface circuit is configured to receive a code instruction and transmit it to the processor, and the processor is configured to run the code instruction to execute the methods described in the embodiments of Fig. 2 to Fig. 4.

In order to achieve the above embodiments, the present disclosure provides another apparatus for reporting an antenna switching capability of a terminal, the apparatus includes a processor and an interface circuit, the interface circuit is configured to receive a code instruction and transmit it to the processor, and the processor is configured to run the code instruction to execute the method described in the embodiments of Fig. 5.

In order to achieve the above embodiments, the present disclosure provides a computer-readable storage medium for storing instructions, which, when executed, allow the method described in the embodiments of Fig. 2 to Fig. 4 to be implemented.

In order to achieve the above embodiments, the present disclosure provides a computer-readable storage medium for storing instructions, which, when executed, allow the method described in the embodiments of Fig. 5 to be implemented.

Fig. 8 is a block diagram of a terminal provided by embodiments of the present disclosure. For example, a terminal 800 can be a mobile phone, a computer, a digital broadcasting user device, a message transceiver device, a game console, a tablet device, a medical device, a fitness device, a personal digital assistant, etc.

Referring to Fig. 8, the terminal 800 may include at least one of the following components: a processing component 802, a memory 804, a power component 806, a multimedia component 808, an audio component 810, an input/output (I/O) interface 812, a sensor component 814, and a communication component 816.

The processing component 802 generally controls the overall operation of the terminal 800, such as operations associated with display, telephone call, data communication, camera operations, and recording operations. The processing component 802 may include at least one processor 820 to execute instructions to accomplish all or part of the steps of the above methods. In addition, the processing component 802 may include at least one module to facilitate interaction between the processing component 802 and other components. For example, the processing component 802 may include a multimedia module to facilitate interaction between the multimedia component 808 and the processing component 802.

The memory 804 is configured to store various types of data to support operations on the terminal 800. Examples of these data include instructions for any application or method operated on the terminal 800, contact data, phone book data, messages, images, videos, etc. the memory 804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disc.

The power component 806 provides power to various components of the terminal 800. The power component 806 may include a power management system, at least one power supply, and other components associated with generating, managing, and distributing power for the terminal 800.

The multimedia component 808 includes a screen providing an output interface between the terminal 800 and a user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, slides and gestures on the touch panel. The touch sensor may not only sense the boundaries of the touch or slide action, but also detect the wake-up time and pressure associated with the touch or slide operation. In some embodiments, the multimedia component 808 includes a front camera and/or a rear camera. The front camera and/or the rear camera can receive external multimedia data when the terminal 800 is in an operating mode, such as a shooting mode or a video mode. Each front camera and rear camera may be a fixed optical lens system or have a focal length and an optical zoom capability.

The audio component 810 is configured to output and/or input audio signals. For example, the audio component 810 includes a microphone (MIC) that is configured to receive external audio signals when the terminal 800 is in the operating mode, such as a call mode, a recording mode, and a speech recognition mode. The received audio signals can be further stored in the memory 804 or transmitted through the communication component 816. In some embodiments, the audio component 810 further includes a speaker for outputting the audio signals.

The Input/output (I/O) interface 812 provides an interface between the processing component 802 and a peripheral interface module, the peripheral interface module may be a keypad, a click wheel, a button, and the like. These buttons may include, but are not limited to, a home button, a volume button, a start button, and a lock button.

The sensor component 814 includes at least one sensor for providing state assessments of various aspects for the terminal 800. For example, the sensor component 814 can detect the on/off state of the terminal 800, the relative positioning of components, such as a display and a keypad of the terminal 800. The sensor component 814 can also detect the position change of the terminal 800 or a component of the terminal 800, the presence or absence of user contact with the terminal 800, the orientation or acceleration/deceleration of the terminal 800 and the temperature change of the terminal 800. The sensor component 814 may include a proximity sensor configured to detect the presence of a nearby object without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 can access to a wireless network based on a communication standard, such as WiFi, 2G or 3G, or a combination of them. In an illustrative embodiment, the communication component 816 receives broadcast signals or broadcast-related information from an external broadcast management system via a broadcast channel. In an illustrative embodiment, the communication component 816 further includes a near field communication (NFC) module to facilitate short range communication. For example, NFC modules may be implemented based on Radio Frequency Identification (RFID) technology, Infrared Data Association (IrDA) technology, Ultra Wide Band (UWB) technology, Bluetooth (BT) technology and other technologies.

In an illustrative embodiment, the terminal 800 may be implemented by at least one application specific integrated circuit (ASIC), digital signal processor (DSP), digital signal processing device (DSPD), programmable logic device (PLD), field programmable gate array (FPGA), controller, microcontroller, microprocessor, or another electronic element, for executing any of the above methods shown in Fig. 2 to Fig. 4.

In an illustrative embodiment, there is also provided a non-transitory computer-readable storage medium including instructions, such as the memory 804 including instructions, the instructions may be executed by the processor 820 of the terminal 800 to complete any of the above methods shown in Fig. 2 to Fig. 4. For example, the non-transitory computer-readable storage medium may be a ROM, a random access memory (RAM), a CD-ROM, a magnetic tape, a floppy disk, and an optical data storage device, etc.

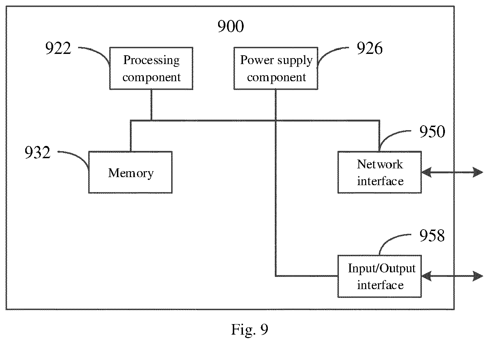

As shown in Fig. 9, Fig. 9 is a schematic diagram of a network device provided by embodiments of the present disclosure. Referring to Fig. 9, the network device 900 includes a processing component 922, which further includes at least one processor, and memory resources represented by a memory 932, for storing instructions that can be executed by the processing component 922, such as application programs. The application programs stored in the memory 932 may include one or more modules each corresponding to a set of instructions. In addition, the processing component 922 is configured to execute instructions to execute any above method applied to the network device, for example, the method shown in the embodiment of Fig. 5.

The network device 900 may also include a power supply component 926 configured to perform power management of the network device 900, a wired or wireless network interface 950 configured to connect the network device 900 to a network, and an input/output (I/O) interface 958. The network device 900 can operate based on operating systems stored in the memory 932, such as Windows Server TM, Mac OS XTM, UnixTM, LinuxTM, FreeBSDTM or the like.

Those skilled in the art will easily come up with other embodiments of the present invention after considering the specification and practicing the invention disclosed herein. This application aims to cover any variations, uses, or adaptive changes of the present disclosure, which follow the general principle of the present disclosure and include the common knowledge or customary technical means in the art not disclosed herein. The specification and embodiments are only considered illustrative, and the true scope and spirit of the present disclosure are indicated by the following claims.

It should be understood that the present disclosure is not limited to the precise structure which has been described above and illustrated in the accompanying drawings, and various modifications and changes can be made without departing from its scope. The scope of the present disclosure is limited only by the attached claims.

In order to implement the above embodiments, the present disclosure also provides a communication apparatus, which can be a network device, a terminal, or can also be a chip, a chip system, or a processor, or the like, that supports the network device to implement the above method, or can also be a chip, a chip system, or a processor, or the like, that supports the terminal to implement the above methods. The apparatus can be used to implement the method described in any of the above method embodiments, as described in the above method embodiments.

The communication apparatus may include one or more processors. The processor can be a general-purpose processor or a dedicated processor, etc. For example, it can be a baseband processor or a central processor. The baseband processor can be used to process communication protocols and communication data, while the central processor can be used to control the communication apparatus (such as a base station, a baseband chip, a terminal, a terminal chip, a DU or a CU, etc.), execute computer programs, and process computer program data.

Optionally, the communication apparatus may also include one or more memories on which computer programs may be stored, and the processor may execute the computer programs to enable the communication apparatus to execute the methods described in the above embodiments. Optionally, the memory may also store data. The communication apparatus and the memory may be arranged separately or may be integrated together.

Optionally, the communication apparatus may also include a transceiver and an antenna. The transceiver can be referred to as a transceiver unit, a transceiver, or a transceiver circuit, etc., and used to achieve the transceiver function. The transceiver can include a receiver and a transmitter. The receiver can be referred to as a receiving machine or a receiving circuit, etc., and configured to achieve the receiving function. The transmitter can be referred to as a transmitting machine or a transmitting circuit, etc., and configured to achieve the transmitting function.

Optionally, the communication apparatus may also include one or more interface circuits. The interface circuit is used to receive code instructions and transmit them to the processor. The processor runs the code instructions to allow the communication apparatus to execute the method described in any of the above method embodiments.

In an implementation, the processor may include the transceiver for implementing the receiving and transmitting functions. For example, the transceiver can be a transceiver circuit, an interface, or an interface circuit. The transceiver circuit, the interface, or the interface circuit used to achieve the receiving and transmitting functions can be separate or integrated together. The transceiver circuit, the interface or the interface circuit can be used for reading and writing codes/data. Or, the transceiver circuit, the interface or the interface circuit can be used for signal transmission or delivery.

In an implementation, the processor may store computer programs, which run on the processor and enable the communication apparatus to execute any of the methods described in the above embodiments. The computer programs may be embedded in the processor, in which case the processor may be implemented by hardware.

In an implementation, the communication apparatus may include a circuit that can achieve the functions of transmitting, receiving, or communicating as described in the aforementioned method embodiments. The processor and the transceiver described in the present disclosure can be implemented on an IC (Integrated Circuit), an analog IC, a RFIC (Radio Frequency Integrated Circuit), a mixed signal IC, an ASIC (Application Specific Integrated Circuit), a PCB (Printed Circuit Board), an electronic devices, etc. The processor and the transceiver can also be manufactured using various IC process technologies such as CMOS (Complementary Metal Oxide Semiconductor), NMOS (nMetal-Oxide-Semiconductor), PMOS (Positive Channel Metal Oxide Semiconductor), and BJT (Bipolar Junction Transistor), bipolar CMOS (BiCMOS), Silicon Germanium (SiGe), Gallium Arsenide (GaAs), and so on.

The communication apparatus described in the above embodiments may be the network device or the terminal, but the scope of the communication apparatus described in the present disclosure is not limited to this. The communication apparatus may be a stand-alone device or may be part of a large device. For example, the communication apparatus may be:
(1) A stand-alone integrated circuit IC, or a chip, or a chip system or subsystem;
(2) A set of one or more ICs, optionally, the set of ICs may also include a storage component for storing data, computer programs;
(3) An ASIC, such as a modem;
(4) A module that can be embedded within other devices;
(5) A receiver, a terminal, a smart terminal, a cellular phone, a wireless device, a handheld machine, a mobile unit, an in-vehicle device, a network device, a cloud device, an artificial intelligence device, and the like;
(6) Others, etc.

For the case where the communication apparatus may be the chip or the chip system, the chip may include a processor and an interface. One or more processors may be arranged, and a plurality of interfaces may be arranged.

Optionally, the chip also includes a memory, and the memory is used to store necessary computer programs and data.

Those skilled in the art can also understand that the various illustrative logical blocks and steps listed in the embodiments of the present disclosure may be implemented through electronic hardware, computer software, or a combination of both. Whether such function is implemented through hardware or software depends on the specific application and design requirements of the overall system. Those skilled in the art may use various methods to implement the functions for each specific application, but such implementation should not be understood as exceeding the scope protected by the embodiments of the present disclosure.

The present disclosure also provides a computer program product, that implements the method described in any embodiment of Fig. 2 to Fig. 4, when executed by a computer.

The present disclosure also provides a computer program product, that implements the method described in the embodiment of Fig. 5, when executed by a computer.

The above embodiments can be fully or partially implemented through software, hardware, firmware, or any combination thereof. When implemented by software, the above embodiments can be fully or partially implemented in the form of the computer program product. The computer program product includes one or more computer programs. When the computer program is loaded and executed on the computer, all or part of the processes or functions according to the embodiments of the present disclosure are generated. The computer can be a general-purpose computer, a specialized computer, a computer network, or other programmable apparatuses. The computer program can be stored in a computer-readable storage medium or transmitted from one computer-readable storage medium to another computer-readable storage medium. For example, the computer program can be transmitted from a website, computer, server, or data center in a wired (such as a coaxial cable, fiber optic, a DSL (Digital subscriber line)) or wireless (such as infrared, wireless, microwave, etc.) manner to another website, computer, server, or data center. The computer-readable storage medium can be any available medium that the computer can access, or a data storage device such as a server, data center, etc. that integrates one or more available media. The available media can be magnetic media (such as floppy disks, hard drives, magnetic tapes), optical media (such as high-density DVD (Digital Video Disc)), or semiconductor media (such as SSD (Solid State Disk)), etc.

Those ordinary skilled in the art can understand that first, second, and other numerical numbers involved in the present disclosure are only for the convenience of description and differentiation, and are not used to limit the scope of the embodiments of the present disclosure, but also indicate the sequential order.

At least one in the present disclosure can also be described as one or more, and a plurality of can be two, three, four, or more, which is not limited in the present disclosure. In the embodiments of the present disclosure, for a technical feature, the technical features described with "first", "second", "third", "A", "B", "C", and "D" are distinguished, and there is no sequential order or magnitude order among the technical features described with "first", "second", "third", "A", "B", "C", and "D".

The correspondences shown in the tables in the present disclosure may be configured or may be predefined. The values of the information in the respective tables are merely examples and may be configured to other values, which are not limited by the present disclosure. When configuring the correspondences between the information and the respective parameters, it is not necessary to configure all of the correspondences illustrated in the respective tables. For example, the correspondences illustrated in certain rows of the tables in the present disclosure may also not be configured. For another example, the above tables may be varied and adjusted appropriately, such as splitting, merging, and the like. The names of the parameters shown in the headings in the above tables may also be other names understandable by the communication apparatus, and the values or representations of the parameters thereof may also be other values or representations understandable by the communication apparatus. The above tables may also be realized by using other data structures, such as arrays, queues, containers, stacks, linear tables, pointers, chain lists, trees, graphs, structures, classes, heaps, hash tables, or hash tables.

Predefined in the context of the present disclosure may be understood to mean defined, pre-defined, stored, pre-stored, pre-negotiated, pre-configured, cured, or pre-fired.

Those ordinary skilled in the art may realize that the units and algorithmic steps of the various examples described in conjunction with the embodiments disclosed herein can be implemented by electronic hardware, or a combination of computer software and electronic hardware. Whether these functions are performed by hardware or software depends on the particular application and design constraints of the technical solution. Those skilled in the art may use different methods to implement the described functions for each particular application, but such implementations should not be considered exceeding the scope of the present disclosure.

It is clear for those skilled in the art that, for the convenience and brevity of the description, the specific operating processes of the above systems, apparatuses, and units can be referred to the corresponding processes in the foregoing methods embodiments, which will not be repeated herein.

The above description is only a specific embodiment of the present disclosure, but the scope of protection of the present disclosure is not limited thereto. Any changes or substitutions that can be readily thought of by any skilled in the art within the scope of the technology disclosed in the present disclosure shall be covered within the scope of protection of the present disclosure. Therefore, the scope of protection of the present disclosure shall be subject to the scope of protection of the stated claims.

## Claims

1. A method for reporting an antenna switching capability of a terminal, wherein the method is applied to the terminal, and the method comprises:
determining an antenna switching configuration combination supported by capability of the terminal according to a target classification principle; and
sending terminal capability reporting information to a network device, the terminal capability reporting information being configured to represent the antenna switching configuration combination supported by the capability of the terminal.

2. The method according to claim 1, wherein the target classification principle comprises a classification principle of support capability.

3. The method according to claim 2, wherein the target classification principle further comprises a classification principle of a number of antennas or a classification principle of a number of antenna ports.

4. The method according to claim 3, wherein the determining the antenna switching configuration combination supported by the capability of the terminal according to the target classification principle comprises:
determining that the capability of the terminal supports the antenna switching configuration combination at least comprising 6 or 8 receiving antennas according to the target classification principle.

5. The method according to claim 4, wherein the number of antennas is classified as 6, and the antenna switching configuration combination only supported by the capability of the terminal at least comprises one or more of the following A)-E) items:
A) one transmitting channel and six receiving channels;
B) two transmitting channels and six receiving channels;
C) four transmitting channels and six receiving channels;
D) one transmitting channel and six receiving channel, two transmitting channels and six receiving channels;
E) one transmitting channel and six receiving channels, two transmitting channels and six receiving channels, four transmitting channels and six receiving channels,
wherein the channel corresponds to the antenna or the antenna port.

6. The method according to claim 4, wherein the number of antennas is classified as 8, and the antenna switching configuration combination only supported by the capability of the terminal at least comprises one or more of the following A)-H) items:
A) one transmitting channel and eight receiving channels;
B) two transmitting channels and eight receiving channel;
C) four transmitting channels and eight receiving channels;
D) one transmitting channel and eight receiving channels, two transmitting channels and eight receiving channels;
E) one transmitting channel and eight receiving channels, two transmitting channels and eight receiving channels, four transmitting channels and eight receiving channels;
F) one transmitting channel and six receiving channels, one transmitting channel and eight receiving channels, two transmitting channels and eight receiving channels, four transmitting channels and eight receiving channels;
G) one transmitting channel and six receiving channels, two transmitting channels and six receiving channels, two transmitting channels and eight receiving channels, four transmitting channels and eight receiving channels;
H) one transmitting channel and six receiving channels, two transmitting channels and six receiving channels, one transmitting channel and eight receiving channels, two transmitting channels and eight receiving channels, four transmitting channels and eight receiving channels.

7. The method according to claim 4, wherein the number of antennas is classified as 1, 2, 4, 6, 8.

8. The method according to claim 7, wherein the number of antennas is classified as 6, and the antenna switching configuration combination supported by the capability of the terminal at least comprises one or more of the following A)-E) items:
A) one transmitting channel and one receiving channel, one transmitting channel and two receiving channels, one transmitting channel and four receiving channels, one transmitting channel and six receiving channels;
B) one transmitting channel and one receiving channel, one transmitting channel and two receiving channels, two transmitting channels and two receiving channels, two transmitting channels and four receiving channels, two transmitting channels and six receiving channels;
C) one transmitting channel and one receiving channel, one transmitting channel and two receiving channels, two transmitting channels and two receiving channels, one transmitting channel and four receiving channels, one transmitting channel and six receiving channels, two transmitting channels and four receiving channels, two transmitting channels and six receiving channels;
D) one transmitting channel and one receiving channel, two transmitting channels and two receiving channels, four transmitting channels and four receiving channels, four transmitting channels and six receiving channels;
E) one transmitting channel and one receiving channel, one transmitting channel and two receiving channels, two transmitting channels and two receiving channels, one transmitting channel and four receiving channels, one transmitting channel and six receiving channels, two transmitting channels and four receiving channels, two transmitting channels and six receiving channels, four transmitting channels and six receiving channels.

9. The method according to claim 7, wherein the number of antennas is classified as 8, and the antenna switching configuration combination supported by the capability of the terminal at least comprises one or more of the following A)-E) items:
A) one transmitting channel and one receiving channel, one transmitting channel and two receiving channels, one transmitting channel and four receiving channels, one transmitting channel and eight receiving channels;
B) one transmitting channel and one receiving channel, one transmitting channel and two receiving channels, two transmitting channels and two receiving channels, two transmitting channels and four receiving channels, two transmitting channels and eight receiving channels;
C) one transmitting channel and one receiving channel, one transmitting channel and two receiving channels, two transmitting channels and two receiving channels, two transmitting channels and four receiving channels, one transmitting channel and four receiving channels, one transmitting channel and six receiving channels, two transmitting channels and six receiving channels, two transmitting channels and eight receiving channels;
D) one transmitting channel and one receiving channel, two transmitting channels and two receiving channels, four transmitting channels and four receiving channels, four transmitting channels and eight receiving channels;
E) one transmitting channel and one receiving channel, one transmitting channel and two receiving channels, two transmitting channels and two receiving channels, one transmitting channel and four receiving channels, one transmitting channel and six receiving channels, one transmitting channel and eight receiving channels, two transmitting channels and four receiving channels, two transmitting channels and six receiving channels, two transmitting channels and eight receiving channels, four transmitting channels and six receiving channels, four transmitting channels and eight receiving channels.

10. The method according to claim 2, wherein the support capability comprises:
supporting dynamic switching of transmitting antennas or transmitting antenna ports; or
supporting dynamic switching of receiving antennas or receiving antenna ports; or
supporting dynamic switching of transmitting antennas and receiving antennas simultaneously; or
supporting dynamic switching of transmitting ports and receiving ports simultaneously.

11. A method for reporting an antenna switching capability of a terminal, wherein the method is applied to a network device, and the method comprises:
receiving terminal capability reporting information sent by the terminal, the terminal capability reporting information being configured to represent an antenna switching configuration combination supported by capability of the terminal.

12. An apparatus for reporting an antenna switching capability of a terminal, wherein the apparatus is applied to the terminal, and the apparatus comprises:
a processing unit configured to determine an antenna switching configuration combination supported by capability of the terminal according to a target classification principle; and
a transceiver unit configured to send terminal capability reporting information to a network device, the terminal capability reporting information being configured to represent the antenna switching configuration combination supported by the capability of the terminal.

13. An apparatus for reporting an antenna switching capability of a terminal, wherein the apparatus is applied to a network device, and the apparatus comprises:
a transceiver unit configured to receive terminal capability reporting information sent by the terminal, the terminal capability reporting information being configured to represent an antenna switching configuration combination supported by the capability of the terminal.

14. An apparatus for reporting an antenna switching capability of a terminal, wherein the apparatus comprises a processor and a memory, the memory stores computer programs, and the processor is configured to execute the computer programs stored in the memory to enable the apparatus to execute a method according to any one of claims 1 to 10.

15. An apparatus for reporting an antenna switching capability of a terminal, wherein the apparatus comprises a processor and a memory, the memory stores computer programs, and the processor is configured to execute the computer programs stored in the memory to enable the apparatus to execute a method according to claim 11.

16. An apparatus for reporting an antenna switching capability of a terminal, comprising: a processor and an interface circuit,
wherein the interface circuit is configured to receive a code instruction and transmit the code instruction to the processor; and
the processor is configured to run the code instruction to execute a method according to any one of claims 1 to 10.

17. An apparatus for reporting an antenna switching capability of a terminal, comprising: a processor and an interface circuit,
wherein the interface circuit is configured to receive a code instruction and transmit the code instruction to the processor; and
the processor is configured to run the code instruction to execute a method according to claim 11.

18. A computer-readable storage medium, for storing instructions, which, when executed, allow a method according to any one of claims 1 to 10 to be implemented.

19. A computer-readable storage medium, for storing instructions, which, when executed, allow a method according to claim 11 to be implemented.
